# DEMANDE DE BREVET EUROPEEN

(11) **EP 1 630 035 A2**
(43) Date de publication de la demande: **01.03.2006**
(21) Numéro de dépôt: 05018014.0
(22) Date de dépôt: 19.08.2005
(51) Int. Cl.: B60N 2/30, B60N 2/015

(54) **Dispositif de jonction d' un conduit d'aération de siège pour véhicule**

(30) Priorité: 27.08.2004 FR 0409176
(71) Demandeur: VALEO SYSTEMES THERMIQUES, 78320 Le Mesnil Saint Denis (FR)
(72) Inventeur: Paumier, Carine, 78000 Versailles (FR); Feuillard, Vincent, 78320 Le Mesnil Saint Denis (FR); Loup, Didier, 78310 Maurepas (FR)

(57) **Abrégé**

L'invention a pour objet un dispositif de jonction entre un conduit (6,105) monté sur un plancher pour l'amenée d'air, notamment en provenance d'une installation de chauffage, de ventilation et/ou de climatisation, et un conduit d'aération (7,103) monté sur l'assise (2,104) d'un siège (1,101), monté mobile en rotation autour d'un axe A1 solidaire du plancher. Le dispositif de jonction comprend des organes rigides (200,201 ; 106,108,118) respectivement affectés au conduit d'amenée (6,105) et au conduit d'aération (7,103). Ces organes rigides (200,201 ; 106,108,118) sont montés mobiles l'un par rapport à l'autre pour une mise en communication aéraulique des conduits (6,105 ; 7,103) entre eux, au moins en position rabattue d'utilisation du siège (1,101).

## Description

### Domaine technique de l'invention.

L'invention est du domaine des aménagements pour les sièges basculants et/ou amovibles, notamment de véhicule, et plus particulièrement de la mise en relation de tels sièges avec un conduit d'amenée d'air, notamment en provenance d'une installation de chauffage, de ventilation et/ou de climatisation. Elle a pour objet un dispositif de jonction entre un tel conduit d'amenée et un conduit d'aération équipant l'assise d'un tel siège.

### Etat de la technique.

Il est connu d'aérer un siège, notamment de véhicule, à partir d'un conduit d'amenée d'air, notamment en provenance d'une installation de chauffage, de ventilation et/ou de climatisation. L'assise du siège comporte un conduit d'aération, qui est en relation avec le conduit d'amenée par l'intermédiaire d'un dispositif de jonction, mettant par exemple en oeuvre un conduit à soufflet. On pourra notamment se reporter au document FR2843916 (VALEO CLIMATISATION) qui divulgue un tel dispositif de jonction.

Un problème posé réside dans la jonction entre le conduit d'amenée et le conduit d'aération de l'assise, lorsque le siège est mobile, et plus particulièrement lorsque le siège est basculant et/ou amovible. En effet, le conduit à soufflet est susceptible de constituer une entrave pour les passagers du véhicule qui peuvent involontairement le détériorer, cette détérioration étant d'autant plus probable que le conduit à soufflet est fragile. Par ailleurs, un tel conduit est susceptible de se coincer au cours du déplacement en bascule du siège, ce qui peut encore provoquer sa détérioration. Enfin, un tel conduit est visible et constitue un inconfort visuel pour les passagers du véhicule.

### Objet de l'Invention.

Le but de la présente invention est de proposer un dispositif de jonction entre un conduit d'amenée d'air, notamment en provenance d'une installation de chauffage, de ventilation et/ou de climatisation, et un conduit d'aération que comporte l'assise d'un siège, notamment de véhicule, qui est basculant et/ou amovible.

Il est plus particulièrement visé par la présente invention de proposer un tel dispositif de jonction qui offre une faculté de mise en relation simple et rapide des conduits entre eux, sans que cette faculté n'interfère avec les modalités de basculement, de retrait, ou de verrouillage et de déverrouillage en position d'utilisation du siège. Il est aussi plus particulièrement visé de proposer un tel dispositif de jonction qui n'implique pas une opération spécifique contraignante, tant pour la mise en relation des conduits entre eux, qu'éventuellement pour la rupture de cette mise en relation. Il est encore visé de proposer un tel dispositif de jonction qui prend en compte la rupture éventuelle de la mise en relation entre les conduits lorsque le siège est basculé et/ou retiré, pour éviter une échappée d'air hors du conduit d'amenée et pour empêcher des corps étrangers de pénétrer à l'intérieur du conduit d'amenée. Il est aussi visé de proposer un tel dispositif de jonction qui autorise une éventuelle translation du siège sans porter atteinte à la jonction des conduits entre eux. Il est enfin visé de proposer un tel dispositif de jonction qui soit compact, qui ne constitue pas une entrave pour les passagers du véhicule et dont l'installation sur le siège soit fiable et pérenne.

Le dispositif de la présente invention est un dispositif de jonction entre un conduit monté sur un plancher pour l'amenée d'air, notamment en provenance d'une installation de chauffage, de ventilation et/ou de climatisation, et un conduit d'aération monté sur l'assise d'un siège, notamment de véhicule. Ce siège est du genre de siège équipé de moyens de basculement autour d'un axe solidaire du plancher entre une position rabattue d'utilisation et une position relevée d'escamotage.

Selon la présente invention, le dispositif de jonction comprend des organes rigides respectivement affectés au conduit d'amenée et au conduit d'aération, ces organes rigides étant montés mobiles l'un par rapport à l'autre pour une mise en communication aéraulique des conduits entre eux, au moins en position rabattue d'utilisation du siège.

Les moyens de basculement du siège constituent avantageusement des moyens de manoeuvre de l'un au moins des organes rigides.

L'organe rigide manoeuvrable par les moyens de basculement du siège est notamment celui affecté au conduit d'aération.

Selon un premier mode de réalisation, les moyens de basculement du siège constituent avantageusement des moyens d'aboutement des conduits entre eux pour leur mise en relation en position rabattue du siège et des moyens de rupture de cet aboutement en position relevée du siège pour rompre la mise en relation des conduits entre eux, les conduits étant équipés d'embouts constituant les dits organes rigides. La mise en relation des conduits entre eux, et la rupture de cette mise en relation, est effectuée concomitamment à la manoeuvre du siège en basculement.

On relèvera le choix des concepteurs d'une liaison par aboutement ruptible entre les conduits d'amenée et d'aération, qui permet de mettre en relation ces conduits entre eux sans nécessiter la présence d'un organe de jonction spécifique et encombrant entre ces conduits.

Le débouché du conduit d'amenée est notamment équipé d'un volet manoeuvrable entre une position d'ouverture correspondante à la position rabattue du siège, et une position de fermeture correspondante à la position redressée du siège.

Le volet est préférentiellement manoeuvrable en position d'ouverture par un organe de manoeuvre solidaire du siège, à l'encontre d'un organe de rappel du volet en position de fermeture.

Le volet est indifféremment manoeuvrable entre ses positions d'ouverture et de fermeture, soit en pivotement, soit en translation. Plus particulièrement, ce volet est indifféremment un volet papillon, un volet drapeau, un volet tambour, un volet coulissant ou autre organe d'obturation mobile analogue.

Selon une variante de réalisation, l'organe de manoeuvre est coopérant avec un mécanisme à levier en relation avec le volet.

L'organe de manoeuvre est par exemple constitué par un doigt d'appui, notamment coopérant avec le mécanisme à levier en étant porté par un organe de verrouillage du siège en position rabattue.

Selon un autre exemple de réalisation, le doigt d'appui est constitué par le conduit d'aération lui-même.

Selon une forme de réalisation, l'axe d'extension générale des conduits dans leur zone d'aboutement est, pour celui du conduit d'aération sensiblement parallèle au plan général de l'assise, et pour celui du conduit d'amenée sensiblement parallèle au plancher. Ces dispositions permettent d'orienter le plan du débouché du conduit d'amenée sensiblement orthogonalement au plancher pour limiter le risque d'introduction de corps étrangers lorsque le siège est en position redressée.

L'aboutement des conduits est réalisé par déplacement du débouché du conduit d'aération transversalement au conduit d'amenée, consécutivement au mouvement basculant du siège. Ces conduits sont sensiblement orientés, au moins dans leur zone de jonction, dans un même plan sensiblement parallèle à celui du plancher lorsque le siège est en position rabattu.

De préférence, l'axe d'extension générale des conduits dans leur zone d'aboutement est sensiblement parallèle à l'axe de basculement du siège.

De préférence encore, les plans des débouchés des conduits sont légèrement inclinés de manière complémentaire par rapport à l'axe d'extension générale des conduits dans leur zone d'aboutement. Ces dispositions visent à éviter le cisaillement d'un joint équipant l'un quelconque au moins des débouchés des conduits lors de leur aboutement.

Le mécanisme à levier comprend par exemple un manchon monté tournant sur une tringle portée par le plancher. Ce manchon comporte une rampe contre laquelle prend appui le doigt d'appui pour provoquer une rotation du manchon, et comporte une tige de manoeuvre d'un levier porteur de l'axe de pivotement du volet monté tournant sur le conduit d'amenée.

L'organe de verrouillage étant notamment coopérant avec une tringle de verrouillage solidaire du plancher, cette dernière constitue ladite tringle sur laquelle est montée tournant le manchon.

Le conduit d'amenée est de préférence monté sur le plancher par l'intermédiaire de la tringle de verrouillage, à laquelle il est fixé par au moins une aile de fixation qu'il comporte.

Ces ailes de fixation étant préférentiellement en couple, celles-ci constituent avantageusement des organes de butée axiale du manchon pour son positionnement en translation le long de la tringle.

De préférence, le manchon comporte en outre un organe d'accrochage d'une extrémité de l'organe de rappel, dont l'autre extrémité est accrochée à un organe porté par le plancher. Ces dispositions sont telles que la manoeuvre du volet en position de fermeture est effectuée par l'intermédiaire du mécanisme à levier à partir de l'effort produit par l'organe de rappel.

L'organe porté par le plancher auquel est accroché l'organe de rappel est préférentiellement constitué du conduit d'amenée.

Selon une autre forme de réalisation, les axes d'extension générale des conduits dans leur zone d'aboutement sont, pour celui du conduit d'aération sensiblement perpendiculaire au plan général de l'assise, et pour celui du conduit d'amenée sensiblement perpendiculaire au plancher.

Selon une variante de réalisation, le doigt d'appui est constitué par le conduit d'aération et le volet est ménagé au débouché du conduit d'amenée. L'extrémité du conduit d'amenée est de préférence aménagée en chambre de réception de l'extrémité du conduit d'aération en position rabattue du siège.

Dans le cas où le volet est manoeuvrable en translation, la zone d'extrémité du conduit d'aération destinée à être reçue à l'intérieur de la chambre du conduit d'amenée est de préférence aménagée en paroi ajourée, telle qu'à partir d'une structure grillagée, pour autoriser le passage de l'air à son travers.

Il ressort des dispositions particulières qui viennent d'être décrites que l'aboutement des conduits entre eux est obtenu à partir de leur positionnement relatif par rapport aux moyens de verrouillage du siège au plancher. La jonction entre les conduits est aisément réalisée par aboutement sans nécessiter une intervention particulière de l'utilisateur autre que celle de basculement du siège. Lorsque le siège est en position redressée, ou lorsqu'il est retiré, le débouché du conduit d'amenée est spontanément obturé par le volet, sans pour autant encore nécessiter une intervention spécifique de l'utilisateur.

Selon un deuxième mode de réalisation, les organes rigides comportent avantageusement un caisson respectif en communication aéraulique l'un avec l'autre au moins en position rabattue d'utilisation du siège, un premier caisson étant affecté au conduit d'amenée et un deuxième caisson étant affecté au conduit d'aération, le deuxième caisson étant monté mobile en rotation autour de l'axe de basculement A1 du siège.

De préférence, les caissons sont coaxialement emboîtés l'un sur l'autre autour d'un arbre de basculement du siège et à distance radiale de ce dernier pour ménager un passage de circulation d'air du premier caisson vers le deuxième caisson.

Le deuxième caisson est avantageusement monté mobile en rotation autour d'une paroi de guidage du premier caisson. Le deuxième caisson comporte préférentiellement un élément de jonction avec le conduit d'aération. Le deuxième caisson est notamment composé de deux coques axiales assemblées entre elles autour de la paroi de guidage du premier caisson, l'une des coques comportant un prolongement radial constituant l'élément de jonction avec le conduit d'aération.

Le premier caisson comporte préférentiellement des flasques d'extrémité en prise sur l'arbre de basculement pour son centrage à distance radiale autour de ce dernier.

De préférence, la paroi de guidage est axialement prolongée par une chambre en relation avec un conduit de jonction entre le premier caisson et le conduit d'amenée. De préférence encore, le conduit de jonction est monté axialement coulissant par rapport au conduit d'amenée.

Le premier caisson est préférentiellement composé de deux coques axiales assemblées entre elles. L'une des coques du premier caisson est susceptible de former avec le conduit de jonction une pièce unitaire.

### Description des figures.

La présente invention sera mieux comprise à la lecture de la description qui va en être faite d'une forme préférée de réalisation, en relation avec les figures des planches annexées, dans lesquelles :
Les fig.1 et fig.2 sont des schémas illustrant un siège basculant, respectivement en position relevée et en position rabattue.
La fig.3 et la fig.4 sont des illustrations en perspective respectivement de dessus et de côté d'un dispositif de la présente invention selon un premier exemple de réalisation, pour la jonction entre des conduits représentés en position non aboutés.
La fig.5 est une illustration du dispositif tel que représenté sur la fig.4, en vue partiellement écorchée.
La fig.6 est une illustration en perspective de dessus du dispositif représenté sur les fig. 3 à fig.5, en position aboutée des conduits.
La fig.7 est une illustration du dispositif tel que représenté sur la fig.6, en vue partiellement écorchée.
Les fig.8 et fig.9 sont des schémas illustrant un dispositif de jonction entre des conduits selon un deuxième exemple de réalisation de l'invention, respectivement en position non aboutée et en position aboutée.
Les fig.10 et fig.11 sont des schémas illustrant un dispositif de jonction entre des conduits selon un troisième exemple de réalisation de l'invention, respectivement en position non aboutée et en position aboutée.
Les fig.12 et fig.13 sont des schémas illustrant un dispositif de jonction entre des conduits selon un quatrième exemple de réalisation de l'invention, respectivement en position non aboutée et en position aboutée.
Les fig.14 et fig.15 sont des illustrations schématiques de côté d'un siège équipé d'un dispositif de jonction selon un cinquième exemple de réalisation de l'invention vu respectivement en position rabattue d'utilisation et en position relevée d'escamotage du siège.
La fig.16 est une illustration partielle du dispositif de jonction représenté sur les fig.14 et fig.15, en coupe axiale frontale suivant l'axe de basculement du siège.
La fig.17 est une illustration partielle du dispositif de jonction représenté sur les fig.14 à fig.16, en coupe axiale transversale suivant l'axe de basculement du siège.
La fig.18 est une illustration d'une coupe transversale du dispositif de jonction illustré sur les fig.14 à fig.17.

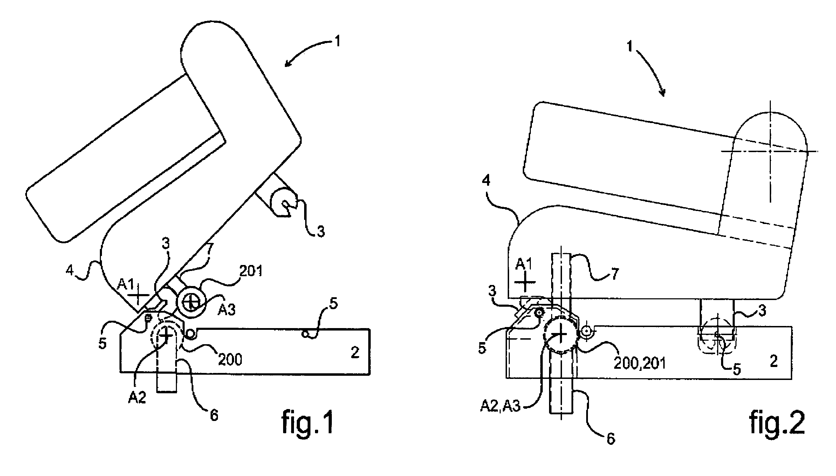

Sur les fig.1 et fig.2, un siège (1), notamment pour véhicule, est monté amovible et mobile autour d'un axe A1 de basculement, sur le plancher (19) du véhicule par l'intermédiaire d'une ossature (2) ancrée au châssis. Ce siège (1) est mobile entre une position relevée illustrée sur la fig.1, et une position rabattue d'utilisation illustrée sur la fig.2. Des organes de verrouillage (3) que comporte l'assise (4) du siège coopèrent avec des tringles (5) solidaires de l'ossature (2), pour le maintien du siège (1) en position rabattue d'utilisation.

Le plancher (19) supporte un conduit (6) d'amenée d'air, notamment en provenance d'une installation de chauffage, de ventilation et/ou de climatisation. Ce conduit d'amenée (6) est indifféremment constitué soit par un tronçon de conduit rapporté sur un conduit principal en relation avec l'installation, soit directement par ce conduit principal. L'assise (4) est quant à elle équipée d'un conduit (7) pour l'aération du siège. Ce conduit d'aération (7) est fixé à l'assise (4) pour être mobile concomitamment à la manoeuvre du siège. En position relevée, la relation entre un embout (201) du conduit d'aération (7) et un embout (200) du conduit d'amenée (6) est rompue, tandis qu'en position rabattue, ces deux conduits (6,7) sont rigoureusement aboutés de manière étanche. Le conduit d'amenée (6) et le conduit d'aération (7) sont positionnés par rapport à l'axe A1 de mobilité du siège (1). Les moyens de basculement du siège (1) sont exploités pour déplacer le conduit d'aération (7) entre la position d'aboutement des conduits (6,7) l'un à l'autre en position rabattue du siège (1), et une position de rupture de cet aboutement en position relevée du siège (1), dans laquelle la mise en relation des conduits (6,7) entre eux est rompue.

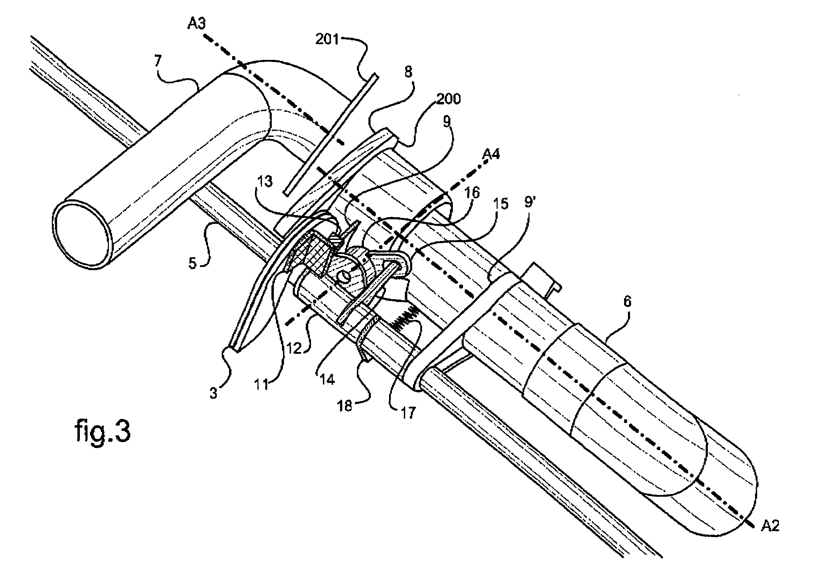

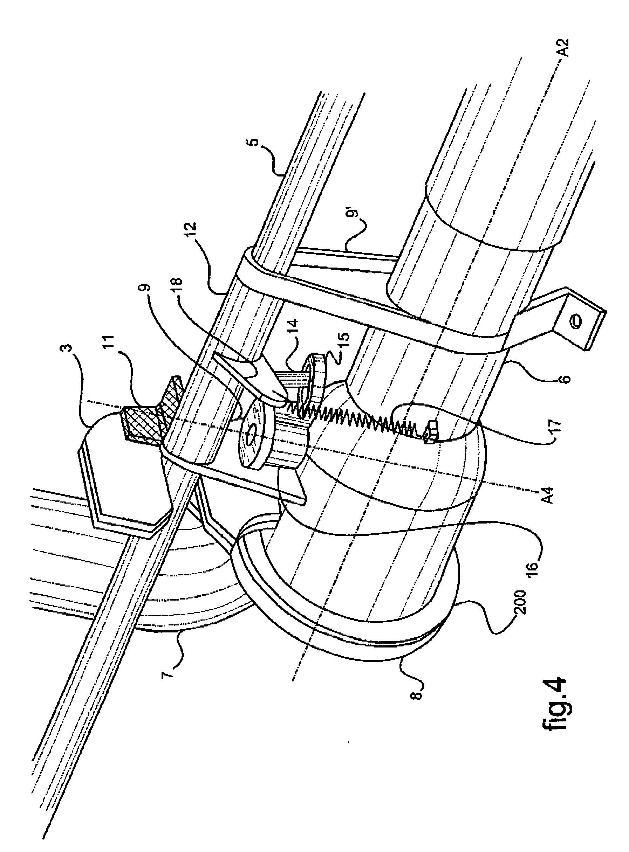

En se reportant par ailleurs aux fig.3 à fig.7, les plans des débouchés des conduits (6,7) sont orientés sensiblement orthogonalement au plancher (19). En outre et plus particulièrement, les axes A2 et A3 d'extension générale des conduits dans leur zone d'aboutement sont orientés parallèlement à l'axe A1 de basculement du siège. L'aboutement des conduits (6,7) est effectué à partir d'une approche radiale glissante du débouché du conduit d'aération (7) vers celui du conduit d'amenée (6).

Pour éviter le cisaillement d'un joint (8) équipant au moins le débouché du conduit d'amenée (6), les plans des débouchés des conduits (6,7) sont légèrement inclinés par rapport à l'axe A1 de basculement du siège (1).

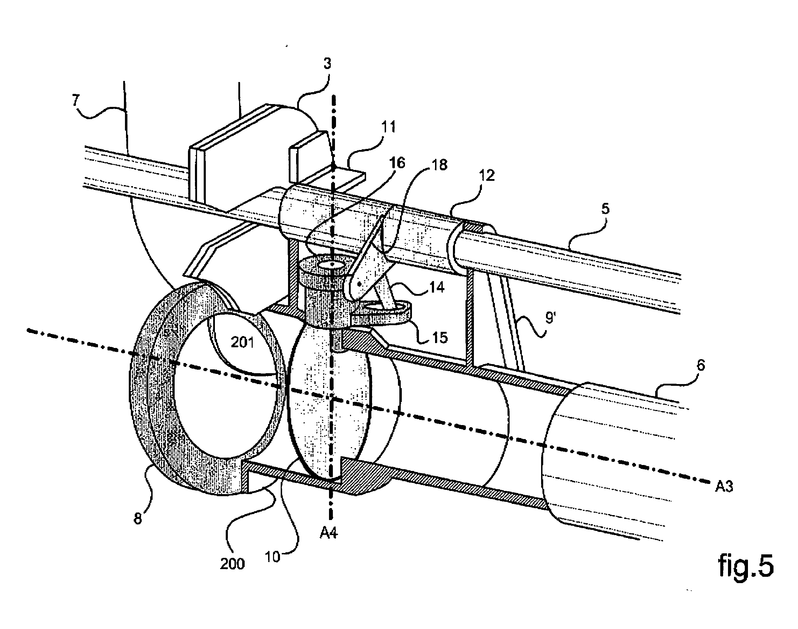

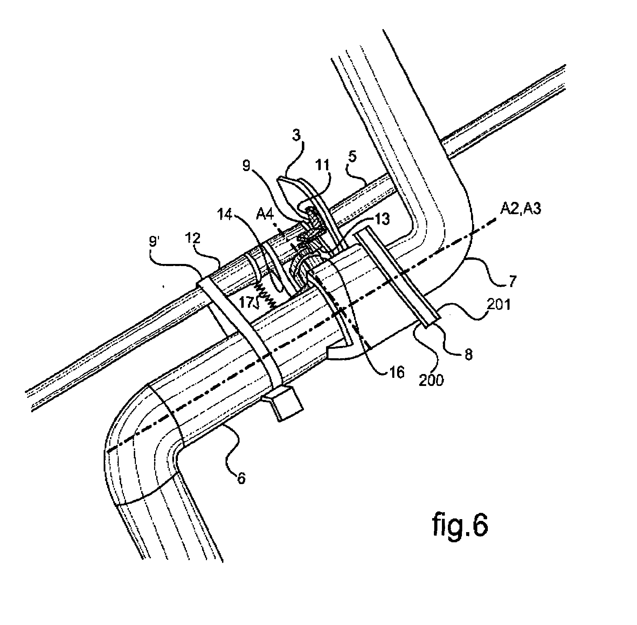

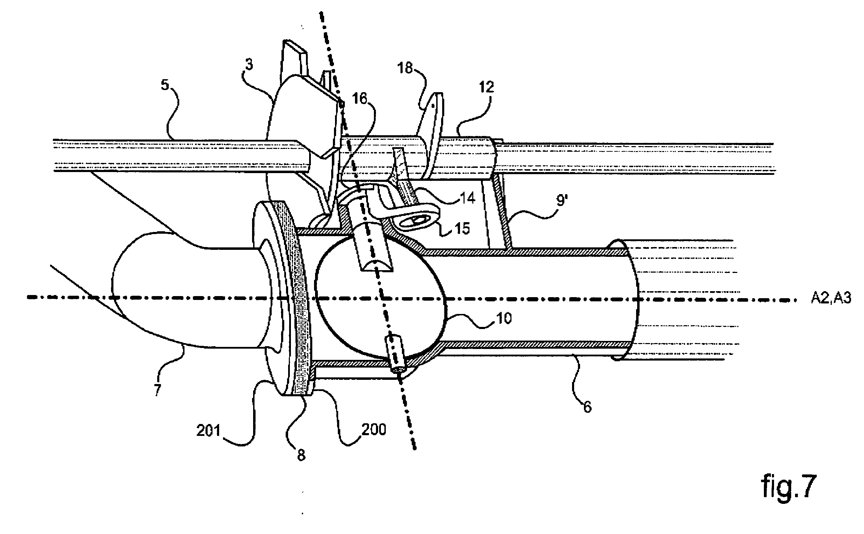

Sur les flg.3 à fig.7, le conduit d'amenée (6) est fixé au plancher (19) par l'intermédiaire de l'une des tringles (5) de verrouillage, et de préférence celle la plus proche de l'axe A1 de basculement du siège (1). Cette fixation est notamment réalisée au moyen d'un couple d'ailes (9,9') reliant le conduit d'amenée (6) à la tringle (5). L'organe de verrouillage (3) correspondant est mis à profit pour manoeuvrer un volet (10) équipant le conduit d'amenée (6). Ce volet (10), visible sur les fig.5 et fig.7, est mobile en pivotement autour d'un axe A4 entre une position d'ouverture correspondante à la position aboutée des conduits (6,7), représentée sur les fig. 6 à fig.7, et une position de fermeture correspondante à la position de rupture de cet aboutement représentée sur les fig.3 à fig.5. Ces dispositions visent à éviter l'introduction de corps étrangers à l'intérieur du conduit d'amenée (6) lorsque le siège (1) est en position relevée.

L'organe de verrouillage (3) est formé d'une platine échancrée manoeuvrable en pivotement et coopérante avec la tringle (5) pour maintenir le siège (1) en position rabattue, à la manière habituelle dans le domaine. Cet organe de verrouillage (3) est porteur d'un doigt d'appui (11), conformé en équerre, pour la manoeuvre en rotation d'un manchon (12). Ce manchon (12) est monté tournant sur la tringle (5), en étant positionné axialement le long de celle-ci au moyen des ailes de fixation (9,9') du conduit d'amenée (6). Le manchon (12) est équipé d'une rampe (13) contre laquelle prend appui le doigt (11) pour provoquer sa rotation, lors du pivotement de l'organe de verrouillage (3) autour de la tringle (5). Le manchon (12) est porteur d'une tige de manoeuvre (14) d'un levier (15) porteur de l'axe d'articulation (16) du volet (10). Le volet (10) est spontanément maintenu en position de fermeture par un ressort de rappel (17), dont l'une des extrémités est fixée au conduit d'amenée (6), et dont l'autre extrémité est accrochée au manchon (12) par l'intermédiaire d'un doigt de levier (18).

En position redressée du siège, tel qu'illustré sur les fig.3 à fig.5, le conduit d'aération (7) est éloigné du siège (1) et sa mise en relation avec le conduit d'amenée (6) est rompue. L'organe de verrouillage (3) étant éloigné de la tringle (5), celui-ci n'exerce aucune poussée sur la rampe (13) du manchon (12), qui est alors librement soumis aux efforts de rappel du ressort (17) pour maintenir le volet (10) en position de fermeture, par l'intermédiaire du mécanisme à levier associant la tige de manoeuvre (14) et le levier (15). En position rabattue du siège (1), l'organe de verrouillage (3) est manoeuvré en pivotement pour maintenir le siège (1) sur la tringle (5). Le doigt d'appui (11) exerce alors une poussée sur la rampe (13) pour manoeuvrer le manchon (12) en rotation à l'encontre des efforts de rappel du ressort (17). La tige de manoeuvre (14) fait alors pivoter le levier (15), provoquant l'ouverture du volet (10).

Il ressort de ces dispositions que l'organe de verrouillage (3) est mis à profit pour manoeuvrer le volet (10) lorsqu'il est lui-même manoeuvré en position de maintien du siège en position rabattue. La manoeuvre du volet (10) est réalisée tant à l'ouverture qu'à la fermeture par l'intermédiaire du manchon (12), qui est positionné axialement le long de la tringle (5) au moyen des ailes de fixation (9,9') du conduit d'amenée (6).

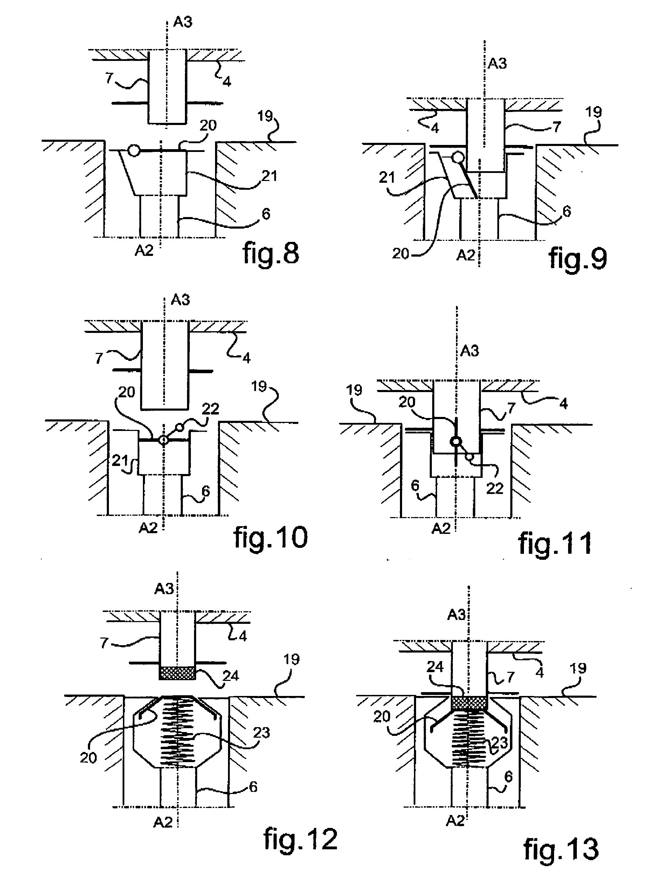

Sur les fig.8 à fig.13, l'axe d'extension A2 du conduit d'amenée (6) est orienté perpendiculairement au plancher (19), et l'axe d'extension A3 du conduit d'aération (7) est orienté perpendiculairement au plan général de l'assise (4). On comprendra que ces orientations sont à prendre en compte dans la zone d'aboutement entre les conduits (6,7).

Le conduit d'aération (7) constitue un doigt d'appui pour manoeuvrer un volet d'obturation (20) du conduit d'amenée (6) en position rabattue du siège, ce volet d'obturation (20) étant spontanément maintenu en position de fermeture lorsque le siège est en position redressée. L'extrémité du conduit d'amenée (6) forme une chambre (21) de réception de l'extrémité correspondante du conduit d'aération (7) en position rabattue du siège.

Sur les fig.8 et fig.9, le volet (20) est monté basculant à l'extrémité du conduit d'amenée (6).

Sur les fig.10 et fig.11, le volet (20) est un volet papillon monté pivotant à l'extrémité du conduit d'amenée (6). Le conduit d'aération (7) constitue un doigt d'appui contre un mécanisme à levier (22) pour la manoeuvre du volet (20).

Sur les fig.12 et fig.13, le volet (20) est mobile en translation à l'encontre d'une poussée exercée par un ressort de rappel (23). L'extrémité du conduit d'aération (7) est aménagée en paroi ajourée (24) pour le passage de l'air à son travers en position rabattue du siège.

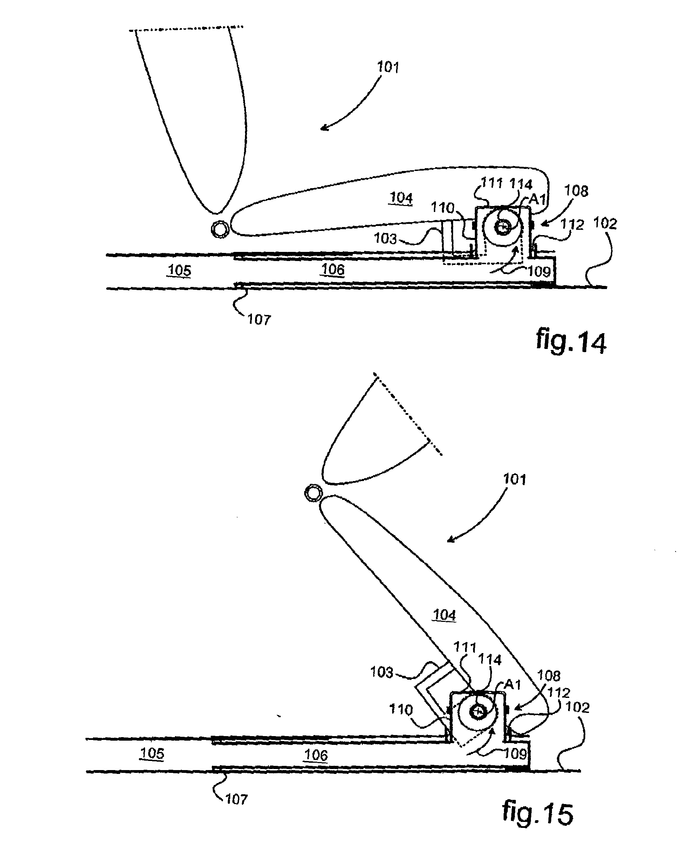

Sur les fig.14 et fig.15, un siège (101), notamment pour véhicule, est monté mobile en rotation autour d'un axe A1 de basculement entre une position rabattue d'utilisation illustrée sur la fig.14, et une position relevée d'escamotage illustrée sur la fig.15. Le siège (101) est également monté mobile en translation sur des rails de guidage, non représentés sur les figures, fixés au plancher (102) du véhicule. Le siège est muni d'un conduit d'aération (103) pour ventiler notamment son assise (104). A cette fin, un dispositif de jonction est interposé entre un conduit d'amenée d'air (105), en relation avec une installation de ventilation, de chauffage et/ou de climatisation du véhicule, et le conduit d'aération (103) du siège (101). Ce dispositif de jonction est organisé pour permettre une communication aéraulique entre le conduit d'amenée (105) et le conduit d'aération (103), quelle que soit la position du siège (101), et notamment en position rabattue de ce dernier (101).

Le dispositif de jonction comporte un conduit de jonction (106) qui est monté axialement coulissant à l'intérieur du conduit d'amenée (105). Ces dispositions sont telles que la communication aéraulique entre le conduit d'amenée (105) et le dispositif de jonction est maintenue, y compris au cours d'un déplacement en translation du siège (101). Un joint périphérique d'étanchéité (107), ou analogue, est interposé entre le conduit d'amenée (105) et le conduit de jonction (106) pour éviter des fuites d'air.

Le dispositif de jonction comporte également un premier caisson (108) qui est fixé au conduit de jonction (106). Le premier caisson (108) est en communication aéraulique avec le conduit de jonction (106) par l'intermédiaire d'un passage d'air (109), cette communication étant maintenue, quelle que soit la position du siège (101).

Le premier caisson (108) est constitué de deux coques axiales (110,111) disposées de part et d'autre de l'axe A1 de basculement du siège (101). Ces coques (110,111) sont assemblées entre elles par emboîtement, par soudage, par vissage ou analogue, une coque inférieure (110) étant interposée entre le conduit de jonction (106) et une coque supérieure (111). Ces coques (110,111) sont préférentiellement réalisées à partir d'un matériau plastique, polypropylène par exemple, mis en forme par moulage, par injection ou analogue. La coque inférieure (110) est préférentiellement munie de lèvres d'étanchéité (112) pour éviter des pertes aérauliques entre la coque inférieure (110) et le conduit de jonction (106). Selon une forme de réalisation non représentée, la coque inférieure et le conduit de jonction forment une pièce unitaire. Selon une autre forme de réalisation non représentée, la coque inférieure est constituée de deux coques élémentaires coulissantes l'une par rapport à l'autre pour permettre un ajustement aisé de la position du dispositif de jonction selon l'écart séparant l'axe de basculement A1 du siège (101) et le conduit d'amenée (105). Une telle réalisation de la coque inférieure permet de corriger selon un axe orthogonal au plancher d'éventuelles variations de tolérance et/ou de côte que présentent les éléments constitutifs du dispositif de jonction et/ou du siège.

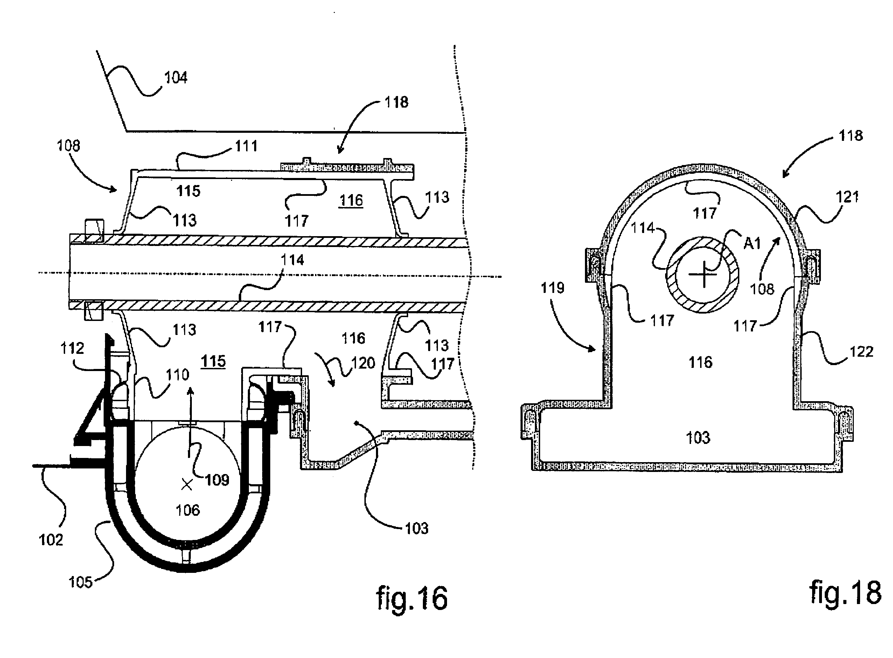

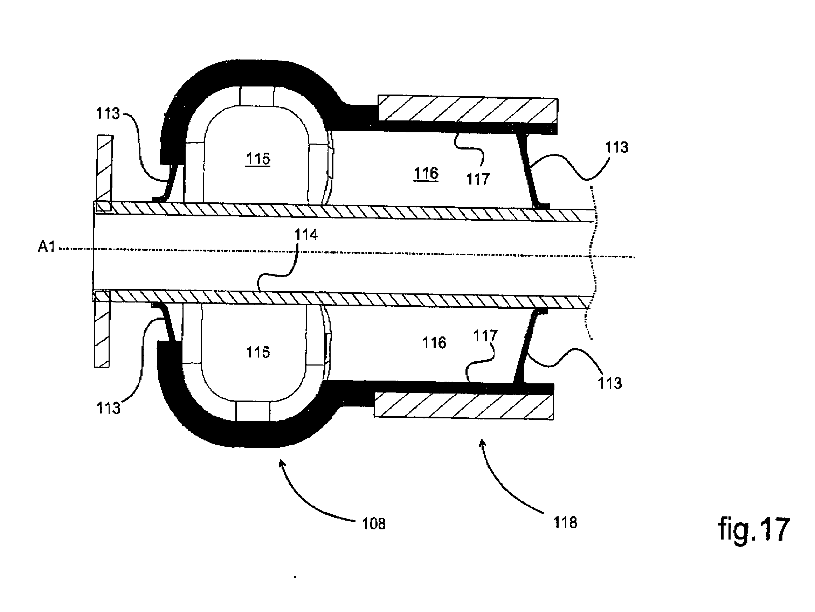

Sur les fig.16 et fig.17, le premier caisson (108) comporte des flasques d'extrémité (113) qui sont radialement en prise sur un arbre de basculement (114) du siège (101) en vue de son centrage sur ce dernier (114). Le premier caisson (108) délimite une chambre (115) qui surplombe le passage d'air (109). Cette chambre (115) est susceptible de présenter une géométrie relativement quelconque, globalement parallélépipédique sur l'exemple de réalisation illustrée. La chambre (115) est prolongée axialement par une enceinte (116), qui est délimitée par une zone cylindrique (117) de la paroi du premier caisson (108). Cette zone cylindrique (117) constitue une paroi de guidage d'un deuxième caisson (118), qui est monté mobile en rotation par emboîtement axial sur le premier caisson (108).

Le deuxième caisson (118) comporte un prolongement radial (119) formant un élément de jonction entre le deuxième caisson (118) et le conduit d'aération (103). La paroi de guidage (117) du premier caisson (108) enveloppée par le deuxième caisson (118) est munie d'une ouverture (120) ménagée à sa périphérie, qui débouche sur l'élément de jonction (119), pour autoriser le passage d'air du premier caisson (108) vers le conduit d'aération (103). En position rabattue d'utilisation du siège (101), tel qu'illustré sur la fig.16, l'ouverture que comporte le premier caisson (108) est totalement dégagée pour favoriser la circulation d'air vers le conduit d'aération (103).

Il résulte de ces dispositions qu'un tel dispositif de jonction présente une pérennité et une fiabilité satisfaisante, à partir de l'exploitation d'organes rigides constitués d'éléments assemblés par emboîtement, par soudage ou analogue. Un tel dispositif de jonction se dispense d'une mise en oeuvre d'éléments déformables potentiellement fragiles, et présente également l'avantage d'être compact, notamment à partir d'une disposition ramassée des éléments le constituant, non seulement axialement mais aussi radialement autour de l'arbre de basculement (114) du siège (101).

Sur la fig.18, l'ouverture (120) que comporte le premier caisson (108) s'étend largement, pour permettre le cas échéant un passage d'air du premier caisson (108) vers le conduit d'aération (103), y compris en position relevée d'escamotage du siège (101), pour le cas échéant maintenir une ventilation du siège (101), quelle que soit sa position.

Le deuxième caisson (118) est composé de deux coques axiales hémicylindriques (121,122) emboîtées l'une sur l'autre, l'une (122) des coques (121,122) comportant l'élément de jonction (119). Les coques (121,122) sont préférentiellement réalisées à partir d'un matériau plastique, polypropylène par exemple, mis en forme par moulage, par injection ou analogue.

## Revendications

1. Dispositif de jonction entre un conduit (6,105) monté sur un plancher (19,102) pour l'amenée d'air, notamment en provenance d'une installation de chauffage, de ventilation et/ou de climatisation, et un conduit d'aération (7,103) monté sur l'assise (4,104) d'un siège (1,101), notamment de véhicule, ce siège (1,101) étant équipé de moyens de basculement autour d'un axe A1 solidaire du plancher (19,102) entre une position rabattue d'utilisation et une position relevée d'escamotage, **caractérisé en ce qu'**il comprend des organes rigides (200,201 ; 106,108,118) respectivement affectés au conduit d'amenée (6,105) et au conduit d'aération (7,103), ces organes rigides (200,201 ; 106,108,118) étant montés mobiles l'un par rapport à l'autre pour une mise en communication aéraulique des conduits (6,105 ; 7,103) entre eux, au moins en position rabattue d'utilisation du siège (1,101).

2. Dispositif de jonction selon la revendication 1, **caractérisé en ce que** les moyens de basculement du siège (1) constituent des moyens de manoeuvre de l'un au moins des organes rigides (200,201 : 106,108,118).

3. Dispositif de jonction selon l'une quelconque des revendications précédentes, **caractérisé en ce que** l'organe rigide (201 ; 118) manoeuvrable par les moyens de basculement du siège (1,101) est celui affecté au conduit d'aération (7,103).

4. Dispositif de jonction selon l'une quelconque des revendications précédentes, **caractérisé en ce que** les moyens de basculement du siège (1) constituent des moyens d'aboutement des conduits (6,7) entre eux pour leur mise en relation en position rabattue du siège (1) et des moyens de rupture de cet aboutement en position relevée du siège (1) pour rompre la mise en relation des conduits (6,7) entre eux, les conduits (6,7) étant équipés d'embouts (200,201) constituant lesdits organes rigides.

5. Dispositif de jonction selon la revendication 4, **caractérisé en ce que** le débouché du conduit d'amenée (6) est équipé d'un volet (10,20) manoeuvrable entre une position d'ouverture correspondante à la position rabattue du siège (1), et une position de fermeture correspondante à la position redressée du siège (1).

6. Dispositif de jonction selon la revendication 5, **caractérisé en ce que** le volet (10,20) est manoeuvrable en position d'ouverture par un organe de manoeuvre (11,7) solidaire du siège (1), à l'encontre d'un organe de rappel (17,23) du volet (10,20) en position de fermeture.

7. Dispositif de jonction selon la revendication 6, **caractérisé en ce que** le volet (10,20) est manoeuvrable en pivotement entre ses positions d'ouverture et de fermeture.

8. Dispositif de jonction selon la revendication 6, **caractérisé en ce que** le volet (20) est un clapet manoeuvrabte en translation.

9. Dispositif de jonction selon la revendication 6 et l'une quelconque des revendications 7 et 8, **caractérisé en ce que** l'organe de manoeuvre (11,7) est coopérant avec un mécanisme à levier en relation avec le volet (10,20).

10. Dispositif de jonction selon l'une quelconque des revendications 6 à 9, **caractérisé en ce que** l'organe de manoeuvre (11,7) est constitué par un doigt d'appui.

11. Dispositif de jonction selon la revendication 10, **caractérisé en ce que** le doigt d'appui (11) est porté par un organe de verrouillage (3) du siège (1) en position rabattue.

12. Dispositif de jonction selon la revendication 10, **caractérisé en ce que** le doigt d'appui est constitué par le conduit d'aération (7).

13. Dispositif de jonction selon l'une quelconque des revendications 4 à 12, **caractérisé en ce que** les plans des débouchés des conduits (6,7) sont légèrement inclinés de manière complémentaire par rapport à l'axe d'extension générale des conduits (6,7) dans leur zone d'aboutement.

14. Dispositif de jonction selon l'une quelconque des revendications 9 à 13, **caractérisé en ce que** le mécanisme à levier comprend un manchon (12) monté tournant sur une tringle (5) portée par le plancher, ce manchon (12) comportant une rampe (13) contre laquelle prend appui le doigt d'appui (11) pour provoquer une rotation du manchon (12), et comportant une tige de manoeuvre (14) d'un levier (15) porteur de l'axe de pivotement (16) du volet (10) monté tournant sur le conduit d'amenée (6).

15. Dispositif de jonction selon la revendication 14, **caractérisé en ce que** l'organe de verrouillage (3) étant coopérant avec une tringle (5) de verrouillage solidaire du plancher, cette demière (5) constitue ladite tringle sur laquelle est montée tournant le manchon (12).

16. Dispositif de jonction selon la revendication 15, **caractérisé en ce que** le conduit d'amenée (6) est monté sur le plancher par l'intermédiaire de la tringle de verrouillage (5), à laquelle il est fixé par au moins une aile de fixation (9,9') qu'il comporte.

17. Dispositif de jonction selon la revendication 16, en ce que les ailes de fixation (9,9') étant en couple, celles-ci constituent en outre des organes de butée axiale du manchon (12) pour son positionnement en translation le long de la tringle (5).

18. Dispositif de jonction selon l'une quelconque des revendications 14 à 17, **caractérisé en ce que** le manchon (12) comporte en outre un organe (18) d'accrochage d'une extrémité de l'organe de rappel (17), dont l'autre extrémité est accrochée à un organe porté par le plancher, de sorte que la manoeuvre du volet (10) en position de fermeture est effectuée par l'intermédiaire du mécanisme à levier à partir de l'effort produit par l'organe de rappel (17).

19. Dispositif de jonction selon la revendication 18, **caractérisé en ce que** l'organe porté par le plancher auquel est accroché l'organe de rappel (10) est constitué du conduit d'amenée (6).

20. Dispositif de jonction selon l'une quelconque des revendications précédentes, **caractérisé en ce que** les axes (A2,A3) d'extension générale des conduits (6,7) dans leur zone d'aboutement sont, pour celui du conduit d'aération (7) sensiblement parallèle au plan général de l'assise (2), et pour celui du conduit d'amenée (6) sensiblement parallèle au plancher.

21. Dispositif de jonction selon la revendication 20, **caractérisé en ce que** les axes (A2,A3) d'extension générale des conduits (6,7) dans leur zone d'aboutement sont sensiblement parallèles à l'axe (A1) de basculement du siège (1).

22. Dispositif de jonction selon l'une quelconque des revendications 4 à 19, **caractérisé en ce que** les axes (A2,A3) d'extension générale des conduits (6,7) dans leur zone d'aboutement sont, pour celui du conduit d'aération (7) sensiblement perpendiculaire au plan général de l'assise (2), et pour celui du conduit d'amenée (6) sensiblement perpendiculaire au plancher (19).

23. Dispositif de jonction selon la revendication 22, **caractérisé en ce que** le doigt d'appui étant constitué par le conduit d'aération (7) et le volet (20) étant ménagé au débouché du conduit d'amenée (6), l'extrémité du conduit d'amenée (6) est aménagée en chambre (21) de réception de l'extrémité du conduit d'aération (7) en position rabattue du siège.

24. Dispositif de jonction selon la revendication 23, **caractérisé en ce que** le volet (20) étant manoeuvrable en translation, la zone d'extrémité du conduit d'aération (7) destinée à être reçue à l'intérieur de la chambre (21) du conduit d'amenée (6) est aménagée en paroi ajourée (24).

25. Dispositif de jonction selon l'une quelconque des revendications 1 à 3, **caractérisé en ce que** les organes rigides (106,108,118) comportent un caisson respectif (108,118) en communication aéraulique l'un avec l'autre, un premier caisson (108) étant affecté au conduit d'amenée (105) et un deuxième caisson (118) étant affecté au conduit d'aération (103), le deuxième caisson (118) étant monté mobile en rotation autour de l'axe de basculement A1 du siège (101).

26. Dispositif de jonction selon la revendication 25, **caractérisé en ce que** les caissons (108,118) sont coaxialement emboîtés l'un sur l'autre autour d'un arbre de basculement (114) du siège (101) et à distance radiale de ce dernier (101) pour ménager un passage (115,116) de circulation d'air du premier caisson (108) vers le deuxième caisson (118).

27. Dispositif de jonction selon l'une quelconque des revendications 25 à 26, **caractérisé en ce que** le deuxième caisson (118) est monté mobile en rotation autour d'une paroi de guidage (117) du premier caisson (108).

28. Dispositif de jonction selon l'une quelconque des revendications 25 à 27, **caractérisé en ce que** le deuxième caisson (108) comporte un élément de jonction (119) avec le conduit d'aération (103).

29. Dispositif de jonction selon la revendication 28, **caractérisé en ce que** le deuxième caisson (118) est composé de deux coques axiales (121,122) assemblées entre elles autour de la paroi de guidage (117) du premier caisson (108), l'une (122) des coques (121,122) comportant un prolongement radial (119) constituant l'élément de jonction avec le conduit d'aération (103).

30. Dispositif de jonction selon l'une quelconque des revendications 26 à 29, **caractérisé en ce que** le premier caisson (108) comporte des flasques d'extrémité (113) en prise sur l'arbre de basculement (114) pour son centrage à distance radiale autour de ce dernier (114).

31. Dispositif de jonction selon l'une quelconque des revendications 27 à 30, **caractérisé en ce que** la paroi de guidage (117) est axialement prolongée par une chambre (115) en relation avec un conduit de jonction (106) entre le premier caisson (108) et le conduit d'amenée (105).

32. Dispositif de jonction la revendication 31, **caractérisé en ce que** le conduit de jonction (106) est monté axialement coulissant par rapport au conduit d'amenée (105).

33. Dispositif de jonction selon l'une quelconque des revendications 25 à 32, **caractérisé en ce que** le premier caisson (108) est composé de deux coques axiales (110,111) assemblées entre elles.
